# EUROPEAN PATENT SPECIFICATION

(11) **EP 1 773 008 B1**
(45) Date of publication and mention of the grant of the patent: **07.05.2008**
(21) Application number: 06021099.4
(22) Date of filing: 06.10.2006
(51) Int. Cl.: H04L 12/56, H04L 12/42, H04L 12/40, H04L 12/46

(54) **Method and system for implementing virtual router redundancy protocol on a resilient packet ring**
Verfahren und System zur Implementierung des VRRP auf einem RPR
Procédé et système pour implementer le VRRP sur un RPR

(30) Priority: 08.10.2005 CN 200510106585
(43) Date of publication of application: 11.04.2007
(73) Proprietor: Huawei Technologies Co., Ltd., Longgang District, Shenzhen Guangdong 518129 (CN)
(72) Inventor: Li, Jian c/o Huawei Technologies Co Ltd, Shenzhen 518129 Guangdong (CN)
(74) Representative: Thun, Clemens

(56) References cited:
- US-A1- 2005 180 391
- HINDEN R ET AL: "Virtual Router Redundancy Protocol (VRRP)" IETF STANDARD, INTERNET ENGINEERING TASK FORCE, IETF, CH, April 2004 (2004-04), XP015009548 ISSN: 0000-0003

## Description

### Field of the Invention

The present invention relates to routing technologies, and particularly, to a method and system for implementing Virtual Router Redundancy Protocol (VRRP), RFC 3768, on a Resilient Packet Ring.

### Background of the Invention

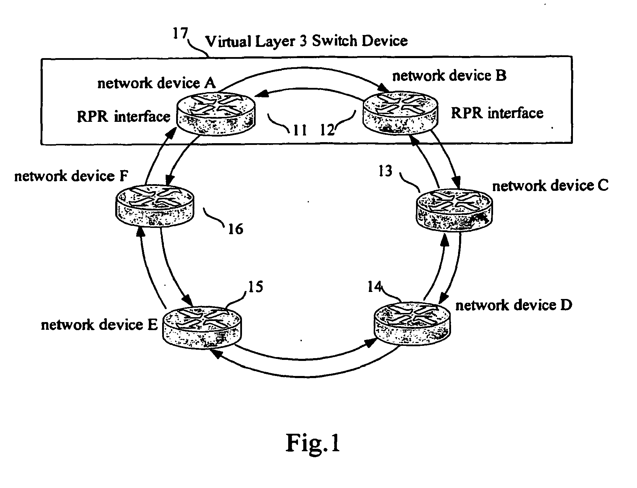

Figure 1 illustrates the architecture of a system for implementing a Virtual Router Redundancy Protocol (VRRP) on a Resilient Packet Ring (RPR) in the prior art. As shown in Figure 1, the RPR includes a network device A11, a network device B12, a network device C13, a network device D14, a network device E15 and a network device F16. The network devices from A11 to F16 can support the RPR protocol, and an RPR interface of each network device may support two work modes, namely a routing mode and a bridging mode respectively. The routing mode means to bear an IP service or an MPLS service etc. on the RPR interface; the bridging mode means to bear an Ethernet service on the RPR interface. The network device shown in Figure 1 may be a router or a layer 3 switch which can support the RPR protocol.

As shown in Figure 1, through running the VRRP on the RPR interfaces of both the network device A11 and the network device B12, the network device A11 and the network device B12 may constitute a VRRP group with a virtual RPR interface.

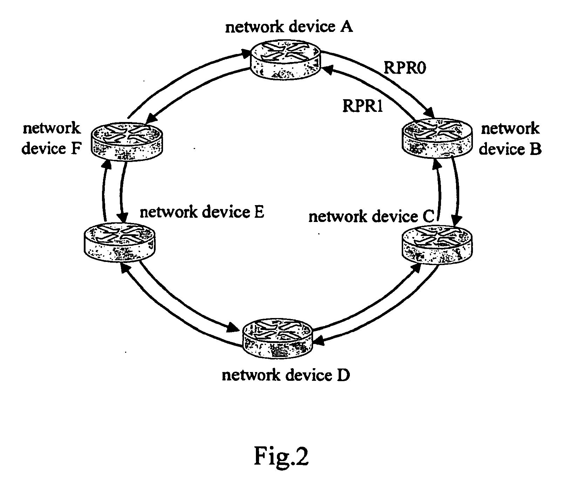

For the network devices from C13 to F16, the VRRP group constituted by the network device A11 and the network device B12 is equal to a virtual layer 3 switch device 17 which can implement functions of a layer 3 switch or a router. Correspondingly, the virtual RPR interface is similar to a default gateway of the virtual layer 3 switch device 17. The network devices from C13 to F16 on the RPR can communicate with other networks through the RPR interface of the virtual layer 3 switch device 17. The RPR has a topology structure of dual-ring with opposite directions, and both of the two ringlets of the RPR, which are called RPR0 and RPR1, can transfer data. As shown in Figure 2, the RPR0 transmits data in a clockwise direction, whereas the RPR1 transmits data in a counter-clockwise direction. Each network device on the RPR adopts a 48-bit Medium Access Control (MAC) address of the Ethernet as an address identifier of the device.

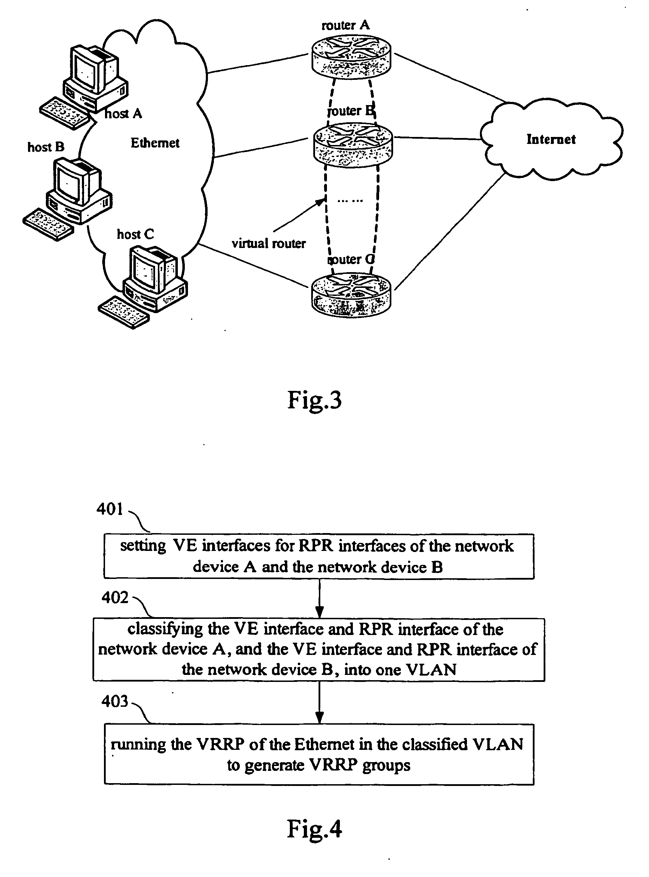

The VRRP has the following functions: selecting one or more routers in a network to constitute at least one VRRP group, which can be seen as a virtual router for those devices not constituting any VRRP group. As shown in Figure 3, host A, B, and C in the Ethernet communicate with the Internet through router A, B, and C, respectively. After the VRRP is run at the router A, B, and C, the router A, B, and C can constitute a VRRP group equal to a virtual router, then hosts in the Ethernet can communicate with the Internet via this virtual router.

In the prior art, after a set of network devices constitute a VRRP group by running the VRRP, each network device in the VRRP group can generate a virtual MAC address and an IP address based on the VRRP. According to the IEEE802.17 protocol, besides supporting the MAC address of the RPR itself, the RPR interface of the network device on the RPR can support at most two other MAC addresses. Thus, the network device can constitute at most two VRRP groups, and generate two virtual layer 3 switch devices. Consequently, when there is a need to generate a plurality of virtual layer 3 switch devices by running the VRRP in order to provide multifunctional services and larger transmission bandwidth, the method of the prior art is unable to meet this network requirement. Moreover, after the set of network devices on the RPR ring have generated a virtual layer 3 switch device based on the VRRP, restricted by the VRRP, it will take at least three seconds for a backup node of the virtual layer 3 switch device to detect a failure of the master node and perform a master/backup switch. The slow speed of master/backup switch can not satisfy the requirements of some real-time services. Here, after a plurality of network devices constitute a VRRP group, a network device need to be appointed as the master node of the VRRP group, and the master node is mainly in charge of switch in layer 3 for the virtual layer 3 switch device, so the master node is also called the master node of the virtual layer 3 switch device. Other network devices in the VRRP group are all backup nodes, and when the master node can not work normally, a certain backup node will substitute for the master node to fulfill the primary work of the virtual layer 3 switch device.

Moreover, document US 2005/0180391 A1 discloses a network connection method for interconnecting a virtual LAN, VLAN (IEEE 802.1q), distributed over plural sites via a network formed by plural layer 2 switches, whereby the layer 2 switch monitors a first virtual LAN configuring frame sent from a site in the plural sites for configuring the virtual LAN. The Virtual Router Redundancy Protocol is used to provide a MAC address, thus to identify the router; in this case the respective layer 2 switch.

In the document "Virtual Router Redundancy Protocol (VRRP)" by Hinden R. et al. the features, design goals and theory of operation of VRRP is described. The message formats, protocol processing rules and state machine that guarantee convergence to a single Virtual Router Master are presented. Finally, operational issues related to MAC address mapping, handling of ARP requests, generation of ICMP redirect messages and security issues are addressed.

### Summary

The invention is to provide a method and system for implementing Virtual Router Redundancy Protocol on a Resilient Packet Ring, so as to generate a plurality of virtual routers on the RPR based on the VRRP.

### The technical scheme of this invention is implemented as follows:

A method for implementing Virtual Router Redundancy Protocol (VRRP) on a Resilient Packet Ring (RPR) as indicated in claim 1.

When a master node in the VRRP group detecting that the topology structure of the RPR changes, the method further comprises: the master node sending a VRRP advertisement message, and after the master node receiving a VRRP advertisement message sent from any of the other master nodes, negotiating a new master node from all the nodes in the VRRP group based on the VRRP, and registering the MAC address of the RPR interface of the new master node by the other nodes which are not determined to be the new master node.

A backup node of the VRRP group registering the MAC address of the RPR interface of the master node; and when the topology structure of the RPR changes, checking whether the MAC address of the RPR interface of the master node exists in the topology table of the backup node; if it does, performing no process; if it doesn't, the backup node determining that the master node is invalid, and negotiating with other backup nodes to select a new master node based on the VRRP, and registering the MAC address of the RPR interface of the new master node by the other nodes which are not determined to be the new master node.

A system for implementing Virtual Router Redundancy Protocol, VRRP, on a Resilient Packet Ring, RPR as defined in claim 5.

It can be seen from the above solution that, in accordance with the method of the present invention, which is for implementing VRRP on a Resilient Packet Ring, a Virtual Ethernet (VE) interface is set on the RPR for network devices which are about to constitute VRRP groups, and all the VE interfaces of the network devices constituting the VRRP groups and the RPR interfaces will be classified into a same virtual local area network (VLAN). Then, the VRRP will be run in the classified VLAN, so as to implement the VRRP on the RPR. In addition, because the VE interface set in the network device can support multiple MAC addresses, a plurality of VRRP groups can be generated on the RPR simultaneously according to this method, so that the RPR may possess a plurality of virtual layer 3 switch devices.

Furthermore, the present invention provides a system for implementing VRRP on an RPR, where the RPR interfaces of network devices in the system are configured to support the bridging mode, and the VE interfaces are set in the network devices constituting VRRP groups. Then, the VRRP will be run at the VE interfaces, so that a plurality of VRRP groups can be generated on the RPR.

### Brief Description of the Drawings

Figure 1 is a schematic diagram illustrating the architecture of a system for implementing VRRP on a Resilient Packet Ring in accordance with the prior art;
Figure 2 is a schematic diagram illustrating a topology structure of the RPR in accordance with the prior art;
Figure 3 is a schematic diagram constituting a virtual router using the VRRP;
Figure 4 is a flowchart for implementing VRRP on a Resilient Packet Ring according to an embodiment of the present invention;
Figure 5 is a schematic diagram illustrating the architecture of a system for implementing VRRP on an RPR according to an embodiment of the present invention.

### Embodiments of the Invention

In a preferred embodiment of the present invention, an interface that can support a plurality of MAC addresses is set on an RPR interface of a network device on an RPR, and the interface supporting a plurality of MAC addresses and the RPR interface are classified into a same VLAN, and then a VRRP is run in the classified VLAN, so as to implement a plurality of virtual layer 3 switch devices on the RPR.

In this embodiment, the interface which can support a plurality of multiple MAC addresses is a VE interface. Since the VE interface is required to be set on the RPR interface of the network device on the RPR, the RPR interface of the network is required to support the bridging mode. The specific reason is as follows: all messages transmitted from the VE interface are layer 2 Ethernet messages, and if the RPR interface is in the routing mode, these messages can not be born on the RPR directly; while network devices in the bridging mode can encapsulate layer 2 Ethernet messages in accordance with the RPR protocol, and bear the messages transmitted from the VE interface onto the RPR.

As shown in Figure 4, the embodiment is described in detail taking the process of how two network devices on the RPR, assuming they are network device A and network device B, constitute three virtual layer 3 switch devices as an example. Before constituting the virtual layer 3 switch devices, all the RPR interfaces of network devices on the RPR are configured to support the bridging mode based on the VRRP. The network devices include network device A and network device B.

Step 401: setting corresponding VE interfaces for RPR interfaces of the network device A and the network device B. The characteristic of a VE interface is the same as that of an Ethernet interface, i.e., can support a plurality of MAC addresses simultaneously.

In the step, the method of setting the VE interface includes: adding a piece of record into an interface index table of the network device for the VE interface, and configuring the MAC address and the IP address of the VE interface, so that other devices can access or operate the VE interface.

Step 402: classifying the VE interface and RPR interface of the network device A, and the VE interface and RPR interface of the network device B, into one VLAN.

After finishing the step, the VE interfaces and RPR interfaces of both the network device A and the network device B are subject to the same VLAN. Once a broadcast message for the VLAN appears, the VE interfaces and RPR interfaces of both the network device A and the network device B can receive this message.

Step 403: setting corresponding group identifiers and IP addresses for these three VRRP groups to be constituted, and running the VRRP of the Ethernet in the classified VLAN to generate these three VRRP groups, so as to generate three virtual layer 3 switch devices. The three virtual switch devices use the preset group identifiers and IP addresses.

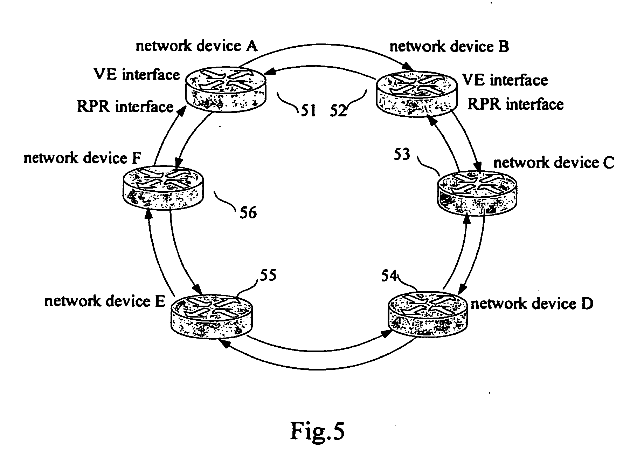

Figure 5 is the architecture of a system for implementing VRRP on an RPR in an embodiment of the present invention. Similarly, the process of how two network devices on the RPR, assuming they are network device A and network device B, constitute three virtual layer 3 switch devices is taken as an example for the detailed description of the systematic architecture of this embodiment shown in Figure 5. The system includes: a network device A51, a network device B52, a network device C53, a network device D54, a network device E55 and a network device F56. Here, the network devices from A51 to F56 connect with each other via the RPR, and the RPR interfaces of network devices from A51 to F56 are configured to support the bridging mode. As shown in Figure 5, each of the network devices A and B has a VE interface. The VE interface and RPR interface of network device A, and the VE interface and RPR interface of network device B are classified into a same VLAN. Afterwards, three group identifiers and IP addresses will be configured respectively, and the VRRP of the Ethernet will be run in the classified VLAN so as to constitute the three corresponding VRRP groups.

Similar to the flowchart as shown in Figure 4 and the system in Figure 5, when two network devices are required to constitute an arbitrary number of VRRP groups and virtual layer 3 switch devices, it is only needed to set corresponding number of group identifiers and IP addresses and run the VRRP in the classified VLAN. If it is required to constitute one or more VRRP groups composed of a plurality of network devices on the RPR, the method as shown in Figure 4 can also be used for reference, that is, setting VE interfaces in a plurality of network devices to constitute a VRRP group, classifying the RPR interfaces and the VE interfaces of these network devices into a same VLAN, setting one or more group identifiers and IP addresses based on the VRRP, and running the VRRP in the classified VLAN, so as to constitute the one or more VRRP groups and virtual layer 3 switch devices.

The RPR described in the embodiment has six network devices, and in practical applications, it may have a random number of network devices on the RPR. In this case; the method and system for setting multiple VRRP groups on the RPR to generate multiple virtual layer 3 switch devices are similar to those of the present embodiment, which are not further discussed here.

After the VRRP is implemented on the RPR according to the method of the present embodiment, another method is further provided for performing a master/backup switch in the VRRP group, which refers to the operation that nodes in a connected domain of the VRRP group negotiate with each other to generate a master node. Here, the connected domain means an area in which each node can interchange information and services with one another. When a node failure appears in the VRRP group or nodes in each connected domain of the VRRP group change, and a new connected domain comes forth or the structure of an old connected domain changes, the previous master node in a certain connected domain is likely to be invalid, or there are multiple master nodes in the connected domain. Then, a master/backup switch is required in the connected domain to select a new master node through negotiation.

The change of the topology structure of the RPR leads to two cases in a certain connected domain: first, at least one master node is added in this connected domain; second, the previous master node is invalid so that there is no master node in the connected domain.

In the case when at least one master node is newly-added to the connected domain, all the master nodes existing in the connected domain will send VRRP advertisement messages on the RPR. If a certain master node in the connected domain does not receive a VRRP advertisement message sent from other master nodes, it is proved that there is only one master node in this connected domain, thus a master/backup switch is not necessary. Meanwhile, each backup node in the connected domain will record the MAC address of the RPR interface of the master node based on the VRRP. If a certain master node in the connected domain has received a VRRP advertisement message sent from other master nodes, all the master nodes in the connected domain will negotiate with each other in accordance with the VRRP to determine a new master node, then other nodes which are not determined to be the new master node will register the MAC address of the RPR interface of the new master node.

In the case when the previous master node in a certain connected domain is invalid, each backup node in the connected domain will check the topology table saved in itself, and judge whether the present topology table contains the MAC address of the RPR interface of the previous master node. If it does, it indicates that the previous master node in the connected domain is not out of work, and a master/backup switch is not necessary. If it doesn't, it indicates that the previous master node in the connected domain is invalid, then the backup nodes may choose a new master node through negotiation in accordance with the VRRP, and other nodes which are not determined to be the new master node will register the MAC address of the RPR interface of this new master node.

After detecting the failure of the master node in the connected domain according to the VRRP, the 50ms topology convergence characteristic of the RPR can be used to speed up the master/backup switch. Here, the 50ms topology convergence characteristic means that all the network devices on the RPR can collect topology information on the RPR within 50ms, and perform a master/backup switch in accordance with the collected topology information.

To sum up, the foregoing is only a preferred embodiment of this invention, and it is not used to limit the protection scope thereof. Any changes and modifications may be made by those skilled in the art without departing from its scope and therefore will be covered by the protection scope as set by the appended claims.

## Claims

1. A method for implementing Virtual Router Redundancy Protocol, VRRP, on a Resilient Packet Ring, RPR, comprising:
setting up an interface supporting a plurality of Medium Access Control, MAC, addresses for an RPR interface of each network device, wherein the network devices will constitute VRRP groups;
the method being **characterized by**
classifying the interface supporting the plurality of MAC addresses and the RPR interface of each network device into one virtual local area network, VLAN;
running the VRRP in the classified VLAN to generate at least one virtual layer 3 switch device.

2. The method according to claim 1, wherein the RPR interface of the network device on the RPR supports a bridging mode; and the interface supporting a plurality of MAC addresses is a Virtual Ethernet, VE, interface.

3. The method according to claim 1 or 2, wherein when a master node in the VRRP group detecting that the topology structure of the RPR changes, the method further comprises: the master node sending a VRRP advertisement message, and after the master node receiving a VRRP advertisement message sent from any of the other master nodes, negotiating a new master node from all the nodes in the VRRP group based on the VRRP, and registering the MAC address of the RPR interface of the new master node by the other nodes which are not determined to be the new master node.

4. The method according to claim 1 or 2, further comprising: a backup node of the VRRP group registering the MAC address of the RPR interface of the master node; and when the topology structure of the RPR changes, checking whether the MAC address of the RPR interface of the master node exists in the topology table of the backup node; if it does, performing no process; if it doesn't, the backup node determining that the master node is invalid, and negotiating with other backup nodes to select a new master node based on the VRRP, and registering the MAC address of the RPR interface of the new master node by the other nodes which are not determined to be the new master node.

5. A system for implementing Virtual Router Redundancy Protocol, VRRP, on a Resilient Packet Ring, RPR, comprising: network devices, connecting with each other via an RPR, wherein each network device comprises an RPR interface and further comprises an interface configured to support a plurality of MAC addresses for the RPR interface, wherein the network device will belong to one or more VRRP groups;
the system being **characterized by**
means for classifying the interface supporting the plurality of MAC addresses and the RPR interface of each network device into one VLAN, and
means for running the VRRP in the classified VLAN to generate at least one virtual layer 3 switch device.

6. The system according to claim 5, wherein the interface supporting a plurality of MAC addresses is a Virtual Ethernet, VE, interface.

## Patentansprüche

1. Verfahren zum Realisieren eines VRRP-Protokolls (Virtual Router Redundancy Protocol) in einem RPR-Ring (Resilient Packet Ring), umfassend ein Einrichten einer Schnittstelle, die eine Vielzahl von Medienzugriffssteueradressen (MAC-Adressen) für ein RPR-Interface jeder Netzwerkvorrichtung unterstützt,
wobei die Netzwerkvorrichtungen VRRP-Gruppen bilden,
**dadurch gekennzeichnet,**
**dass** das Interface, welches die Vielzahl der MAC-Adressen unterstützt, und das RPR-Interface jeder Netzwerkvornchtung in ein VLAN-Netzwerk (Virtual Local Area Network) klassifiziert werden
und **dass** das VRRP-Protokoll in dem klassifizierten VLAN-Netzwerk betrieben wird, um zumindest eine virtuelle Schicht-3-Vermittlungsvorrichtung zu erstellen.

2. Verfahren nach Anspruch 1, wobei das RPR-Interface der Netzwerkvorrichtung in dem RPR-Ring einen Überbrückungsmodus unterstützt und wobei das Interface, welches eine Vielzahl der MAC-Adressen unterstützt, ein virtuelles Ethernet-Interface (VE) ist.

3. Verfahren nach Anspruch 1 oder 2, wobei in dem Fall, dass ein Hauptknoten in der VRRP-Gruppe feststellt, dass sich die Topologiestrukhu des RPR-Ringes ändert, das Verfahren ferner umfasst:
der Hauptknoten sendet eine VRRP-Anzeigenachricht und nach Empfang einer von irgendeinem der anderen Hauptknoten ausgesandten VRRP-Anzeigenachricht durch den Hauptknoten erfolgt ein Aushandeln eines neuen Hauptknotens aus sämtlichen Knoten in der VRRP-Gruppe auf der Grundlage des VRRP-Protokolls und eine Registrierung der MAC-Adresse des RPR-Interface des neuen Hauptknotens durch die anderen Knoten, die nicht als neuer Hauptknoten bestimmt sind.

4. Verfahren nach Anspruch 1 oder 2, ferner umfassend:
einen Sicherungsknoten der VRRP-Gruppe, der die MAC-Adresse des RPR-Interface des Hauptknotens registriert,
und in dem Fall, dass sich die Topologiestruktur des RPR-Ringes ändert, wird überprüft, ob die MAC-Adresse des RPR-Interface des Hauptknotens in der Topologietabelle des Sicherungsknotens existiert,
wobei in dem Fall, dass die MAC-Adresse existiert, kein Prozess ausgeführt wird und wobei in dem Fall, dass die betreffende MAC-Adresse nicht existiert, durch den Sicherungsknoten bestimmt wird, dass der Hauptknoten ungültig ist, und mit anderen Sicherungsknoten ausgehandelt wird, um einen neuen Hauptknoten auf der Grundlage des VRRP-Protokolls auszuwählen und die MAC-Adresse des RPR-Interface des neuen Hauptknotens durch die anderen Knoten zu registrieren, die nicht als neuer Hauptknoten bestimmt sind.

5. System zum Realisieren eines VRRP-Protokolls (Virtual Router Redundancy Protocol) in einem RPR-Ring (Resilient Packet Ring), umfassend Netzwerkvorrichtungen, die durch einen RPR-Ring miteinander verbunden sind, wobei jede Netzwerkvorrichtung ein RPR-Interface aufweist und ferner ein Interface enthält, welches so konfiguriert ist, dass es eine Vielzahl von MAC-Adressen für das RPR-Interface unterstützt, wobei die Netzwerkvorrichtung zu einer oder mehreren VRRP-Gruppen gehören wird,
**gekennzeichnet**
**durch** Mittel zum Klassifizieren des Interface, welches die Vielzahl der MAC-Adressen unterstützt, und des RPR-Interface jeder Netzwerkvorrichtung in ein VLAN-Netzwerk
und Betreiben des VRRP-Protokolls in dem klassifizierten VLAN-Netzwerk zum Erstellen zumindest einer virtuellen Schicht-3-Vermittlungsvorrichtung.

6. System nach Anspruch 5, wobei das Interface, welches eine Vielzahl von MAC-Adressen unterstützt, ein virtuelles Ethernet-Interface (VE) ist.

## Revendications

1. Procédé de mise en oeuvre d'un protocole de redondance de routeur virtuel, VRRP, sur un anneau de paquet résilient, RPR, comprenant: la configuration d'une interface supportant une pluralité d'adresses de contrôle d'accès au support, MAC, pour une interface RPR de chaque dispositif de réseau, dans lequel les dispositifs de réseau constitueront des groupes VRRP;
le procédé étant **caractérisé par**
le classement de l'interface supportant la pluralité d'adresses MAC et de l'interface RPR de chaque dispositif de réseau dans le réseau local virtuel, VLAN;
l'exécution du VRRP dans le VLAN classé pour générer au moins un dispositif de commutation de couche 3 virtuel.

2. Procédé selon la revendication 1, dans lequel l'interface RPR du dispositif de réseau sur le RPR supporte un mode de pont; et l'interface supportant une pluralité d'adresses MAC est une interface Ethernet virtuel, VE.

3. Procédé selon la revendication 1 ou 2, dans lequel lorsqu'un noeud maître dans le groupe VRRP détecte que la structure topologique des RPR change, le procédé comprend en outre: l'envoi par le noeud maître d'un message d'avertissement VRRP, et après la réception par le noeud maître d'un message d'avertissement VRRP envoyé par l'un quelconque des autres noeuds maîtres, la négociation d'un nouveau noeud maître parmi tous les noeuds dans le groupe VRRP sur la base du VRRP et l'enregistrement de l'adresse MAC de l'interface RPR du nouveau noeud maître par les autres noeuds qui ne sont pas déterminés comme étant le nouveau noeud maître.

4. Procédé selon la revendication 1 ou 2, comprenant en outre: un noeud de secours du groupe VRRP enregistrant l'adresse MAC de l'interface RPR du noeud maître; et lorsque la structure topologique du RPR change, vérifiant si l'adresse MAC de l'interface RPR du noeud maître existe dans la table topologique du noeud de secours; si c'est le cas, il n'effectue aucun procédé; si ce n'est pas le cas, le noeud de secours détermine que le noeud maître est invalide et négocie avec d'autres noeuds de secours pour choisir un nouveau noeud maître sur la base du VRRP, et enregistrant l'adresse MAC de l'interface RPR du nouveau noeud maître par les autres noeuds qui ne sont pas déterminés comme étant le nouveau noeud maître.

5. Système pour la mise en oeuvre d'un protocole de redondance de protocole virtuel VRRP, sur un anneau de paquet résilient RPR, comprenant: des dispositifs de réseau, reliés les uns aux autres via un RPR, dans lequel chaque dispositif de réseau comprend une interface RPR et comprend en outre une interface configurée pour supporter une pluralité d'adresses MAC pour l'interface RPR, dans lequel le dispositif de réseau appartiendra à un groupe VRRP ou plus;
le système étant **caractérisé par**
un moyen de classement de l'interface supportant ladite pluralité d'adresses MAC et l'interface RPR de chaque dispositif de réseau dans un VLAN, et un moyen d'exécution du VRRP dans le VLAN classé afin de générer au moins un dispositif de commutation de couche 3 virtuel.

6. Système selon la revendication 5, dans lequel l'interface supportant une pluralité d'adresses MAC est une interface Ethernet virtuel, VE.
